# EUROPÄISCHE PATENTSCHRIFT

(11) **EP 1 218 271 B1**
(45) Veröffentlichungstag und Bekanntmachung des Hinweises auf die Patenterteilung: **30.07.2003**
(21) Anmeldenummer: 00967763.4
(22) Anmeldetag: 23.09.2000
(51) Int. Cl.: B65H 5/04

(54) **VORRICHTUNG ZUM DREHEN EINES PAPIERSTAPELS**
DEVICE FOR ROTATING A STACK OF PAPER
DISPOSITIF POUR TOURNER UNE PILE DE PAPIER

(30) Priorität: 09.10.1999 DE 19948704
(43) Veröffentlichungstag der Anmeldung: 03.07.2002
(73) Patentinhaber: BÖWE SYSTEC AG, 86159 Augsburg (DE)
(72) Erfinder: MICHEL, Bernd, 86456 Gablingen (DE); OLENFALK, Bengt, 86343 Königsbrunn (DE)
(74) Vertreter: Schwarz, Thomas, Dipl.-Ing.
(86) Internationale Anmeldenummer: EP0009320
(87) Internationale Veröffentlichungsnummer: WO01027011

(56) Entgegenhaltungen:
- DD-A- 236 503
- NL-A- 7 104 553
- US-A- 3 269 516
- US-A- 3 366 221
- US-A- 3 587 824
- US-A- 5 535 999

## Beschreibung

Die Erfindung betrifft eine Vorrichtung zum Fördern eines Stapels aus mindestens einem im wesentlichen horizontalen Papierbogen unter gleichzeitigem Drehen um die Vertikale nach dem Oberbegriff des Anspruches 1.

Derartige Vorrichtungen werden im Bereich des sogenannten Papermanagements benötigt, also insbesondere beim Zusammenstellen, Falten, Kuvertieren und Etikettieren von Postsendungen.

Die DD 236 503 A1 beschreibt eine Fördereinrichtung zur Drehung von Büchern oder Buchblocks um 180° innerhalb einer Buchfertigungsstrasse. Die Bücher oder Buchblocks werden hierbei durch ein endlos umlaufendes Fördersystem geführt, welches Aufnahmekörper mit rechenförmigen Drehplattformen aufweist. Die Bücher werden auf diesen Drehplattformen mit Hilfe von Greifern, die jeder Drehplattform zugeordnet sind, festgeklemmt und gedreht. Nach Lösen der Klemmung erfolgt die Übergabe der Bücher auf das nachfolgende Transportband, indem die rechenförmigen Drehplattformen von parallelen schmalen Bändern durchkämmt werden.

Die in dieser Druckschrift beschriebene Fördereinrichtung ist von außerordentlich kompliziertem Aufbau, da jeder Drehplattform eine eigene Greif- bzw. Klemmeinrichtung zugeordnet ist, die auch jeweils einer eigenen Steuerung bzw. Betätigung bedarf. Darüber hinaus arbeitet diese Fördereinrichtung systembedingt langsam und eignet sich nicht für hohe Durchsatzraten. Aufgrund des komplizierten Aufbaus ist sie ferner wartungsintensiv, fehleranfällig und teuer.

Ferner zeigt die DE 43 08 601 A1 einen Förderer zum Überführen von Büchern, Blocks oder dergleichen in eine gedrehte neue Lage mit einer Andrückvorrichtung für die Bücher und Blocks. Hierbei werden die Bücher bzw. Blocks zunächst durch einen Zuförderer einem Klemmförderer übergeben und dann, ohne gleichzeitige translatorische Bewegung, auf diesem gedreht. Es findet kein gleichzeitiges Drehen und Fördern statt. Die DE 42 13 351 A1 zeigt außerdem einen Palettierer mit einer Platte, gegen die die zu palettierenden Güter angedrückt und gedreht werden.

Es besteht daher die Aufgabe, eine gattungsgemäße Vorrichtung so auszubilden, daß sie einfach und billig in der Herstellung ist, eine geringe Fehleranfälligkeit aufweist, wartungsarm ist und hohe Transportgeschwindigkeiten ermöglicht.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher beschrieben, welche zeigen:
- **Figur 1a:**: eine Ansicht einer erfindungsgemäßen Vorrichtung von oben bei abgenommener Platte;
- **Figur 1b:**: eine Einzelansicht der Steuerschiene aus Figur 1a;
- **Figur 2:**: eine Seitenansicht der Vorrichtung aus Figur 1a mit Platte, jedoch ohne Darstellung der Hebevorrichtung;
- **Figur 3:**: einen Querschnitt durch die Vorrichtung gemäß Figur 2 bei abgesenktem Drehteller und
- **Figur 4:**: eine Darstellung gemäß Figur 3 bei angehobenem Drehteller und eingeklemmtem Stapel.
- **Figur 5a:**: eine Draufsicht auf eine besondere Ausgestaltung der Platte;
- **Figur 5b:**: eine Seitenansicht der Platte aus Figur 5a;
- **Figur 5c:**: eine Vorderansicht der Platte aus Figur 5a.

Für die Zwecke der vorliegenden Beschreibung bezeichnet der Begriff "Stapel" nicht nur einen aus mehreren Papierbögen bestehenden Stapel, sondern auch nur einen einzigen Papierbogen. Die beschriebene Vorrichtung ist sowohl zum Fördern und Drehen von einzelnen Papierbögen als auch von Stapeln aus Papierbögen geeignet; zur leichteren Beschreibung wird ausschließlich der Begriff "Stapel" benutzt.

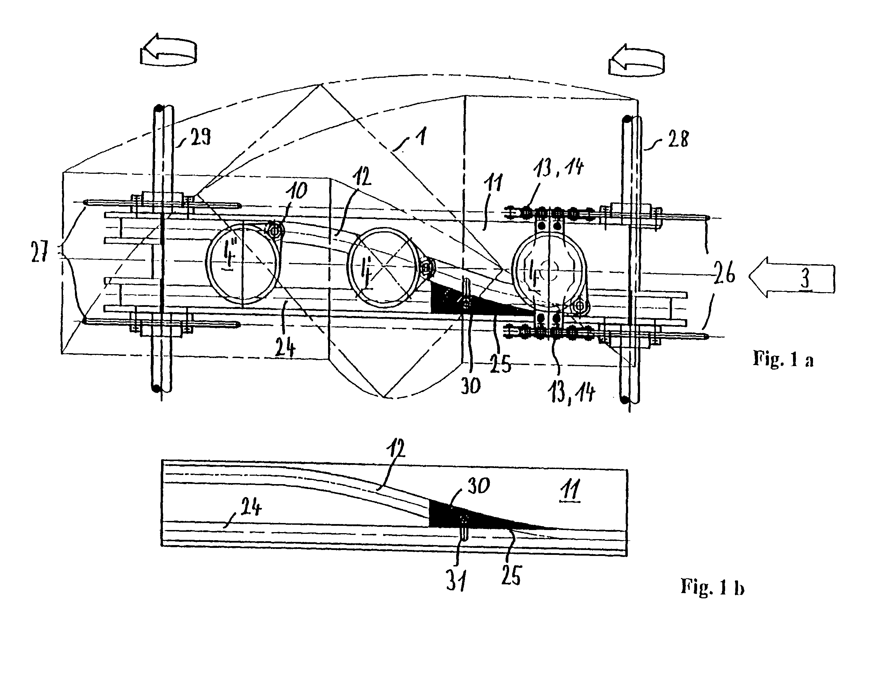

Die in Figur 1 von oben dargestellte Vorrichtung ist in ein Papiertransportsystem integriert, welches in der Regel andere Maschinen, die im Papermanagement üblicherweise Verwendung finden, aufweist. Die beschriebene Vorrichtung befindet sich also in einer Verarbeitungsstrasse für Papierbögen bzw. -stapel. Die Richtung, in welcher der Stapel 1 entlang der Verarbeitungsstrasse und der beschriebenen Vorrichtung gefördert wird, ist in den Figuren als Förderrichtung 3 bezeichnet.

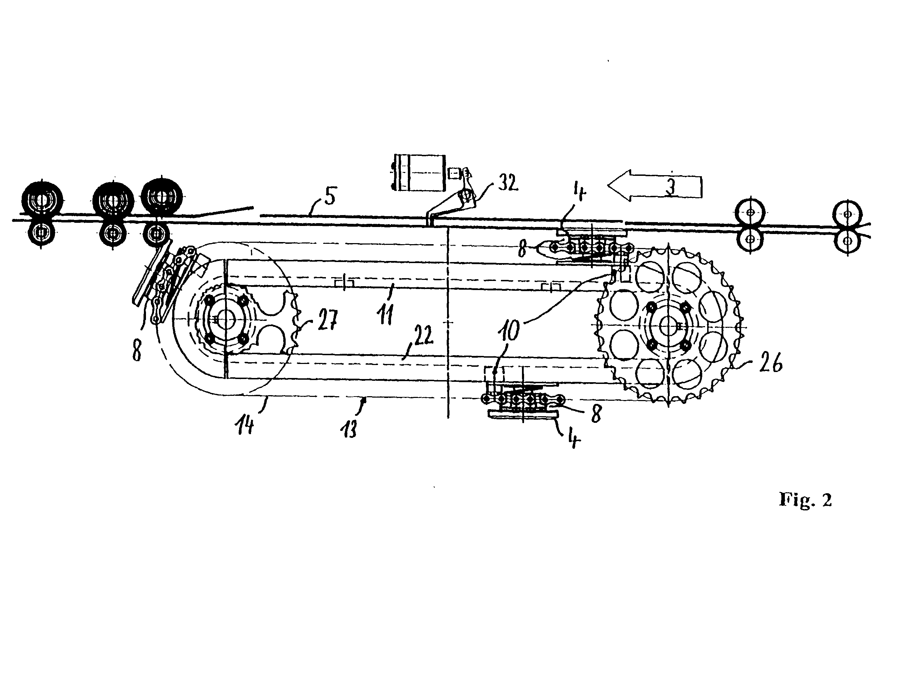

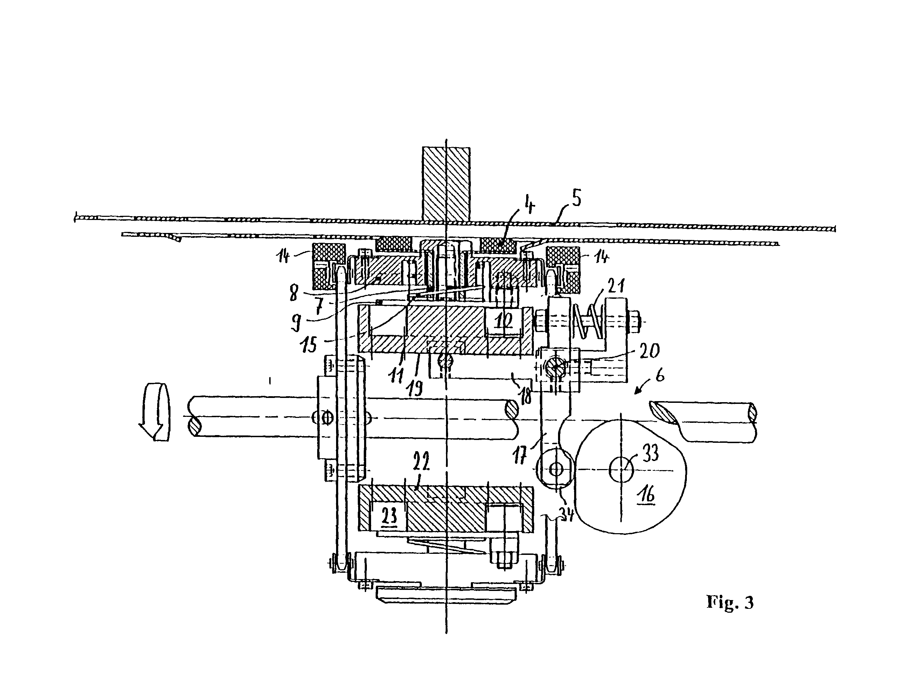

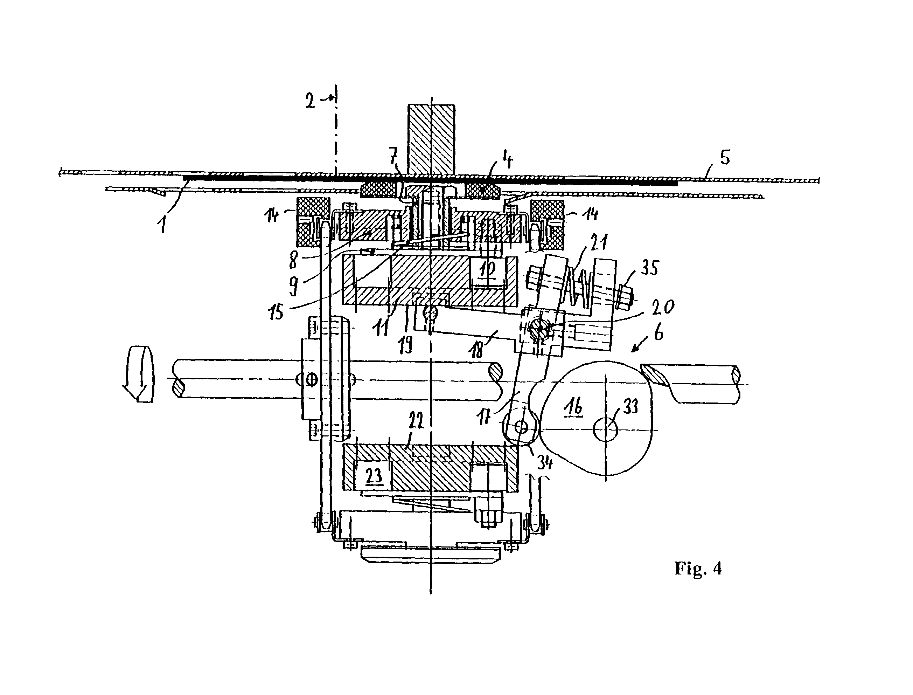

Wie es den Figuren 1a und 2, die eine Ansicht von oben und von der Seite der beschriebenen Vorrichtung zeigen, zu entnehmen ist, weist die Vorrichtung eine in Förderrichtung 3 laufende Kettenanordnung 13 auf, welche wiederum aus zwei Endlosketten 14 besteht, die über vordere und hintere Kettenräder 26, 27 laufen. Zwischen den beiden Endlosketten 14 sind, wie am besten aus Figur 2 ersichtlich ist, in gleichmäßigen Abständen drei Trägerblöcke 8 befestigt. Die Trägerblöcke 8 werden später unter Bezugnahme auf die Figuren 3 und 4 genauer beschrieben. Die Kettenräder 26 und 27 werden durch die Antriebswelle 29 angetrieben. Hierdurch bewegen sich die beiden Endlosketten 14, jeweils mit ihrem oberen Kettentrum in Förderrichtung 3 und damit auch die auf dem oberen Kettentrum befindlichen Trägerblöcke 8, während die auf dem unteren Kettentrum befindlichen Trägerblöcke 8 sich entgegen der Förderrichtung 3 zurückbewegen.

Unterhalb des oberen Kettentrums befindet sich zwischen den beiden Endlosketten 14 eine gestellfeste, jedoch in ihrer Höhe verstellbare Steuerschiene 11. Unter Höhenverstellbarkeit ist hier und im folgenden eine Verstellbarkeit in Richtung des zu fördernden Stapels 1 zu verstehen. Die Steuerschiene ist alleine in Figur 1b dargestellt. Sie besteht vorzugsweise aus Kunststoff, beispielsweise Polytetrafluoräthylen und ist im wesentlichen quaderförmig. An ihrer dem zu fördernden Stapel 1 zugewandten Oberfläche weist die Steuerschiene 11 eine Kulissenanordnung auf. Diese besteht aus einer ersten Kulisse 12, die - in Förderrichtung 3 gesehen - vom Anfang der Steuerschiene 11 sich kurvenförmig bis zu deren Ende erstreckt und aus einer weiteren Kulisse 24, die gerade verläuft. Da beide Kulissen 12 und 24 einen gemeinsamen Eingang, aber zwei Ausgänge am gegenüberliegenden Ende der Steuerschiene 11 haben, ist dazwischen eine Weiche 25 angeordnet, die im dargestellten Ausführungsbeispiel aus einem von oben im wesentlichen dreieckigen Kunststoffstück besteht, welches seitlich, also quer zur Förderrichtung 3 verschiebbar ist. Befindet sich dieses Kunststoffteil 30 in der in Figur 1b dargestellten Position, ist die gerade durchlaufende, weitere Kulisse 24 in Betrieb. Verschiebt man das Kunststoffteil 30 entlang des Langloches 31 (in Figur 1b nach unten), wird die weitere Kulisse 24 versperrt und die kurvenförmige, erste Kulisse 12 geöffnet.

Die durchlaufende, weitere Kulisse 24 wird nur benutzt, wenn der Stapel 1 während des Förderns nicht gedreht werden soll. Soll der Stapel 1 jedoch gedreht werden, befindet sich das Kunststoffteil 30 in der (nicht dargestellten) unteren Position, wodurch die kurvenförmige Kulisse 12 aktiv ist. Dieser Fall ist auch in Figur 1a dargestellt.

Die Drehung des Stapels 1 um seine Flächennormale, also im wesentlichen die Vertikale 2, ist am besten in Figur 1a dargestellt. Zum besseren Verständnis sind hier drei Trägerblöcke 8 mit zugehörigen Drehtellern 4 nebeneinander dargestellt. Dies ist in Abweichung zu Figur 2, wo die drei Trägerblöcke 8 entlang der gesamten Kettenanordnung 13 äquidistant angeordnet sind, erleichtert aber die spätere Funktionsbeschreibung, insbesondere die Beschreibung des Drehvorgangs.

Der Aufbau und die Komponenten eines Trägerblocks 8 sind am besten den Querschnittsdarstellungen gemäß Figuren 3 und 4 zu entnehmen. Aus Figur 3 ist ersichtlich, daß der Trägerblock 8 zwischen den beiden Endlosketten 14 und an diesen befestigt ist. Der Trägerblock 8 ist damit drehfest gelagert. Der Trägerblock 8 weist seinerseits etwa in der Mitte eine Bohrung auf, durch die eine vertikale Achse 7 verläuft. An ihrer Oberseite lagert die Achse 7 einen Drehteller 4, an ihrer Unterseite weist sie eine Scheibe 9 auf. Zwischen der Oberseite der Scheibe 9 und dem Trägerblock 8 ist ein Abstand vorgesehen und die Scheibe 9 stützt sich gegen den Trägerblock 8 mit einer Rückholfeder 15 ab. Im dargestellten Ausführungsbeispiel greift diese Rückholfeder 15 in eine Ringnut an der Unterseite des Trägerblocks 8 ein. Der Drehteller 4 ist ebenfalls im wesentlichen als Scheibe ausgebildet und an seiner Oberfläche mit einem Material beschichtet, welches einen großen Reibungskoeffizienten gegenüber Papier hat, beispielsweise mit einem Polyurethanschaum, vorzugsweise einem Polyurethan-Elastomer mit Zellstruktur.

An ihrer Unterseite weist die Scheibe 9 eine Kurvenrolle 10 auf, die um eine vertikale Achse drehbar gelagert ist, welche jedoch nicht mit der Achse 7 kolinear ist, sondern parallel hierzu verläuft.

Wie Figur 3 weiter zu entnehmen ist, greift diese Kurvenrolle 10 in die unterhalb des Trägerblocks 8 angeordnete Kulisse 12 der Steuerschiene 11 ein.

Gegenüber der oberen Oberfläche des Drehtellers 4 befindet sich eine fest mit dem Gestell der Vorrichtung verbundene Platte 5, die als Andrückvorrichtung für den zu fördernden und zu drehenden Stapel 1 wirkt. Ferner ist eine Anschlagvorrichtung 32 vorgesehen, die Sensormittel zur Erfassung eines ankommenden Stapels 1 aufweisen kann, um die beschriebene Vorrichtung daraufhin in Betrieb zu setzen.

Bei der Auswahl der Platte 5 ist besonders die Reibung zwischen dieser Platte und dem Stapel 1 zu beachten, da der Stapel 1 gegenüber dieser Platte 5 linear in Förderrichtung 3 transportiert und gleichzeitig gedreht wird, was in der nachfolgenden Beschreibung der Arbeitsweise der Vorrichtung im einzelnen erläutert wird. In der einfachen Ausgestaltung der Platte ist diese einfach ein Metallblech oder ein Kunststoffteil. Die Platte kann jedoch auch als mustergewalztes Blech ausgebildet sein, welches zusätzlich mit einer Kunststoffolie laminiert sein kann.

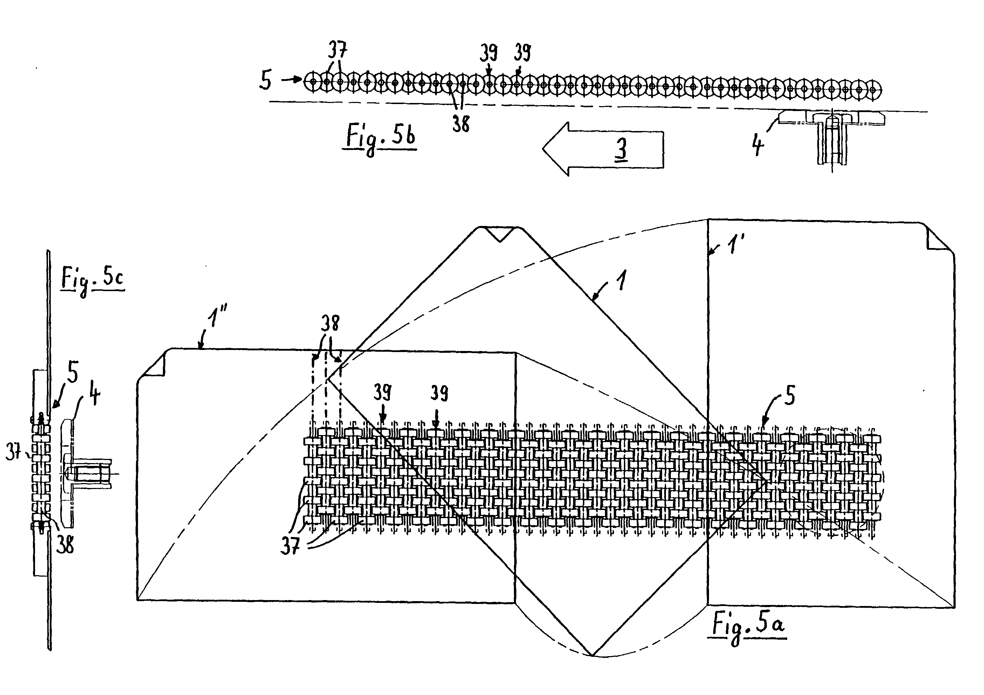

In einer weiteren Ausführungsform, die in den Figuren 5a, 5b und 5c dargestellt ist, welche die Platte 5 aus verschiedenen Ansichten zeigen, weist die Platte eine Vielzahl von Rollen 37 auf, die zu Rollenanordnungen 39 zusammengefaßt sind. Jede Rollenanordnung 39 weist in dem dargestellten Ausführungsbeispiel 5 auf jeweils einer Drehachse 38 angeordnete Rollen 37 auf. Einander benachbarte Rollenanordnungen 39 sind so seitlich gegeneinander versetzt, daß aus der Seitenansicht gemäß Figur 5b die einzelnen Rollen 37 miteinander überlappen. Eine Vielzahl derartiger Rollenanordnungen 39 ist in Förderrichtung 3 hintereinander angeordnet, wobei die Drehachsen 38 sowohl senkrecht zur Förderrichtung 3 als auch parallel zur Ebene der Platte 5 liegen.

In einer alternativen, nicht dargestellten Ausführungsform können anstelle von Rollen 37 auch Kugeln verwendet werden. Diese sind dann beispielsweise zwischen zwei Lagerplatten gelagert und stehen aus einer Lagerplatte, die dem Stapel zugewandt ist, mit einem Teil ihrer Oberfläche hervor. Zwischen den beiden Lagerplatten sind die Kugeln drehbar gelagert, so daß auch der hervorstehende Teil der Oberfläche in allen Richtungen drehbar ist. Die Anordnung der Kugeln kann beispielsweise in Form eines quadratischen oder hexagonalen Gitters sein.

Die Anordnung aus Drehteller 4, Scheibe 9 mit Kurvenrolle 10 und Steuerschiene 11 ist gegenüber dem Trägerblock 8 höhenverstellbar ausgebildet. Der Trägerblock 8 seinerseits ist zwar über die Kettenanordnung 13 in Förderrichtung 3 verfahrbar, jedoch nicht höhenverstellbar. Die Höhenverstellbarkeit von Drehteller 4 mit Scheibe 9 gegenüber dem Trägerblock 8 wird durch die gleitende Lagerung der Achse 7 in der Bohrung des Trägerblocks 8 sowie durch den Abstand zwischen der Scheibe 9 und dem Trägerblock 8 bewirkt. Durch die Rückstellfeder 15 wird der Drehteller 4, wenn er nicht betätigt ist, in der unteren Position gehalten. Die Höhenverstellung des Drehtellers 4 erfolgt durch Druck von unten auf die Steuerschiene 11, die wiederum auf die Scheibe 9 drückt, welche fest mit dem Drehteller 4 verbunden ist und diesen dann gegenüber dem Trägerblock 8 nach oben drückt, wie es in Figur 4 dargestellt ist.

Der Druck auf die Unterseite der Steuerschiene 11 zum Zwecke der Höhenverstellung der Anordnung wie beschrieben, wird durch eine Hebevorrichtung 6 bewirkt. Diese weist eine asymmetrische, angetriebene Kurvenscheibe 16 auf, die um eine Drehachse 33, welche in Förderrichtung 3 verläuft, rotiert. Der Umfang dieser Kurvenscheibe 16 wirkt auf ein erstes, gerades Hebelstück 17, welches zum leichteren Abrollen auf der Kurvenscheibe eine Rolle 34 trägt. Dieses erste Hebelstück 17 ist um eine gemeinsame Achse 20 mit einem zweiten Hebelstück 18 drehbar, dessen Ende wiederum unmittelbar auf die Unterseite der Steuerschiene 11 wirkt. Das erste Hebelstück 17 ist von seinem Kontaktpunkt mit der Kurvenscheibe 16 über die gemeinsame Drehachse 20 hinaus verlängert, während das zweite Hebelstück 18 von seinem Kontaktpunkt mit der Steuerschiene 11 ebenfalls über die gemeinsame Drehachse 20 hinaus verlängert und anschließend in Richtung des ersten Hebelstücks 17 gewinkelt ist. Die freien Enden beider Hebelstücke 17 und 18 sind somit zueinander parallel und durch eine Verschraubung 35 miteinander verschiebbar verbunden. In Richtung dieser Verschraubung wirkt eine als Schraubenfeder ausgebildete Ausgleichsfeder 21, durch deren Vorspannung der Anpressdruck der Hebelanordnung 17/18 an die Unterseite der Steuerschiene 11 und damit der auf den Stapel 1 wirkende Druck einstellbar ist.

Figur 3 ist ferner zu entnehmen, daß eine Rückführsteuerschiene 22 mit einer Kulisse 23 vorgesehen ist, die sich beidseits an die Steuerschiene 11 (Figur 2) anschließt, die Kurvenrolle 10 am Ende der Steuerschiene aufnimmt und unterhalb der Steuerschiene 11 zu deren Anfang zurückführt.

### Die Vorrichtung arbeitet wie folgt:

Gelangt ein Stapel 1 von einer vorgeschalteten Maschine oder einer Fördervorrichtung in Förderrichtung 3 an den Anschlag 32, wird die Kettenanordnung 13 durch Drehung der Antriebswelle 29 in Gang gesetzt. Die Kurvenrolle 10 einer Trägerblock/Drehteller-Anordnung greift hierbei in die Kulisse 12 der Steuerschiene 11 ein und verläuft entlang dieser Kulisse 12. Der Drehteller 4 wartet bereits unterhalb der Mitte des zu fördernden und zu drehenden Stapels 1, wenn dieser gegen den Anschlag 32 läuft. Gleichzeitig mit der Fördervorrichtung wird die Hebevorrichtung 6 in Gang gesetzt, also die Kurvenscheibe 16 von der in Figur 3 gezeigten Stellung zu der in Figur 4 gezeigten Stellung gedreht. Hierdurch wird der erste Hebel 17 und, vermittelt durch die Ausgleichsfeder 21, auch der zweite Hebel 18 betätigt, welcher auf die Unterseite der Steuerschiene 11 drückt. Die Steuerschiene 11 drückt daraufhin die Scheibe 9 nach oben und diese wiederum - über die Achse 7 - den Drehteller 4. Dies erfolgt unter Kompression der Rückstellfeder 15. Der Drehteller 4 drückt mit seiner beschichteten Oberseite den Stapel 1 gegen die Platte 5, wodurch der Stapel 1 also zwischen Drehteller 4 und Platte 5 eingeklemmt wird.

Gleichzeitig verfährt der Trägerblock in Förderrichtung 3, wobei die Kurvenrolle 10 immer in der Kulisse 12 abläuft. Da der Trägerblock 8 durch Verbindung mit den Endlosketten 14 selbst drehfest ist, die Anordnung aus Drehteller 4 und Scheibe 9 (mit Kurvenrolle 10) gegenüber dem Trägerblock 8 jedoch verdrehbar ist, wird durch die seitliche Verschiebung der Kurvenrolle 10 innerhalb der Kulisse 12 die Scheibe 9 und damit auch der Drehteller 4 gedreht. Dies ist in Figur 1a durch die Bezugszahlen 4' und 4" für den Drehteller angedeutet. In der Stellung 4' ist der Drehteller gegenüber der Ausgangsposition (4) um 45° gedreht, in der Stellung 4" um 90°.

Nach dem Ende des Transport- und Drehvorgangs senkt sich die Hebevorrichtung 6 wieder ab, was durch Umkehrung der oben beschriebenen Abläufe erfolgt und der Stapel 1 wird frei gegeben. Zu diesem Zeitpunkt befindet sich der Stapel 1 bereits im Bereich einer nachgeschalteten Transportvorrichtung und wird weiter befördert.

Um zu gewährleisten, daß nicht nur einzelne Papierbögen, sondern auch Stapel aus mehreren Bögen zuverlässig gefördert und gedreht werden können, ohne daß der Stapel hierbei auseinanderfällt, ist die Wahl der geeigneten Reibungskoeffizienten zwischen Platte 5, Papier und Oberfläche des Drehteller 4 von entscheidender Bedeutung. Die Haftreibung zwischen der Oberfläche des Drehtellers 4 und einem Papierbogen muß größer sein als die Haftreibung zwischen einem Papierbogen und der Platte 5. Ferner muß auch die Haftreibung zwischen benachbarten Papierbögen größer sein als die Reibung zwischen einem Papierbogen und der Platte 5. Dies wird auf seiten des Drehtellers 4 vorzugsweise mit der beschriebenen Beschichtung aus Polyurethanschaum erreicht, auf seiten der Platte 5 durch geeignete Ausgestaltung bzw. Beschichtung der Oberfläche. Beispielsweise ist die Oberfläche als mustergewalztes Blech ausgeführt, um eine Art Luftkissen zwischen dem angepressten Stapel 1 und der Platte 5 zu bilden. Zusätzlich kann die Oberfläche noch mit Kunststoff, beispielsweise einer Kunststoffolie, beschichtet sein oder mit einer Metallbeschichtung, z. B. einer Verchromung, versehen sein. Alternative Ausgestaltungsformen der Platte 5 sind oben unter Bezugnahme auf die Figuren 5a, 5b und 5c beschrieben. In der in diesen Figuren dargestellten Ausführungsform weist die Platte 5 eine Vielzahl von Rollen 37 auf, die zu Rollenanordnungen 39 zusammengefaßt sind. Besonders vorteilhaft bei dieser Ausführungsform ist die sehr geringe Reibung zwischen den sich mit Förderung des Stapels 1 in Förderrichtung 3 drehenden Rollen 37 und den Stapel 1. In einer weiteren alternativen, aber nicht dargestellten Ausführungsform werden anstelle der Rollen 37 allseitig drehbare Kugeln verwendet, wodurch ebenfalls eine sehr geringe Reibung zwischen Platte 5 und Stapel 1 sichergestellt wird.

In alternativen Ausführungsformen ist es selbstverständlich möglich, den Stapel 1 nicht um 90°, sondern auch um jeden anderen Winkel zu drehen, insbesondere um 180°. Dies erfolgt lediglich durch geeignete Ausgestaltung der Kulisse 12.

## Patentansprüche

1. Vorrichtung zum Fördern eines Stapels (1), der aus mindestens einem horizontalen Papierbogen besteht, unter gleichzeitigem Drehen um die Vertikale (2), mit einem Gestell, einem in Förderrichtung (3) verfahrbaren und um einen bestimmten Winkel drehbaren Drehteller (4) zur Aufnahme der Unterseite des Stapels (1) und einer auf die Oberseite des Stapels (1) wirkenden Andrückvorrichtung zum Andrücken des Stapels (1) an den Drehteller (4), **dadurch gekennzeichnet, daß** die Andrückvorrichtung als an dem Gestell befestigte Platte (5) ausgebildet ist, der Reibungskoeffizient zwischen dieser Platte (5) und einem Papierbogen geringer ist als der zwischen dem Drehteller (4) und einem Papierbogen, der Drehteller (4) mit einer Hebevorrichtung (6) gegenüber dem Gestell höhenverstellbar gelagert ist, welche den Drehteller (4) nach Aufnahme des Stapels (1) und während des Drehens in Richtung der Platte (5) hebt und gegen diese drückt und anschließend wieder absenkt.

2. Vorrichtung nach Anspruch 1, **dadurch gekennzeichnet, daß** die den Stapel (1) tragende Oberfläche des Drehtellers (4) aus Polyurethanschaum, vorzugsweise aus einem Polyurethan-Elastomer mit Zellstruktur, besteht.

3. Vorrichtung nach einem der Ansprüche 1 oder 2, **dadurch gekennzeichnet, daß** die dem Stapel (1) zugewandte Oberfläche der Platte (5) als mustergewalztes Blech ausgebildet ist.

4. Vorrichtung nach Anspruch 3, **dadurch gekennzeichnet, daß** das mustergewalzte Blech mit Kunststoff beschichtet, beispielsweise mit einer Kunststoffolie laminiert, ist

5. Vorrichtung nach Anspruch 1 oder 2, **dadurch gekennzeichnet, daß** die dem Stapel (1) zugewandte Oberfläche der Platte (5) eine Vielzahl von Rollen (37) aufweist, deren Drehachsen (38) parallel zur Ebene der Platte (5) und senkrecht zur Förderrichtung (3) verlaufen.

6. Vorrichtung nach Anspruch 5, **dadurch gekennzeichnet, daß** jeweils mehrere Rollen (37) auf einer Drehachse (38) im Abstand zueinander angeordnet sind und eine Vielzahl dieser Rollenanordnungen (39) so in Förderrichtung (3) hintereinander angeordnet sind, daß die Rollen (37) benachbarter Rollenanordnungen (39) quer zur Förderrichtung (3) seitlich zueinander versetzt sind.

7. Vorrichtung nach Anspruch 6, **dadurch gekennzeichnet, daß** der Abstand benachbarter Rollenanordnungen (39) so gering ist, daß sich die Rollen (37) benachbarter Rollenanordnungen (39) - von der Seite gesehen - überlappen.

8. Vorrichtung nach einem der Ansprüche 1 oder 2, **dadurch gekennzeichnet, daß** die dem Stapel (1) zugewandte Oberfläche der Platte (5) eine Vielzahl von drehbar gelagerten Kugeln aufweist.

9. Vorrichtung nach Anspruch 8, **dadurch gekennzeichnet, daß** die Kugeln zwischen zwei Lagerplatten gelagert sind und die dem Stapel zugewandte Lagerplatte für jede Kugel eine Öffnung aufweist, durch welche ein Teil der Oberfläche dieser Kugel hervorsteht.

10. Vorrichtung nach einem der voranstehenden Ansprüche, **dadurch gekennzeichnet, daß** der Drehteller (4) auf einem Ende einer Achse (7) sitzt, die drehbar in einem Trägerblock (8) gelagert ist und an ihrem anderem Ende eine Scheibe (9) trägt, an der eine Kurvenrolle (10) exzentrisch zu der Achse (7) und parallel zu dieser drehbar gelagert ist, der Trägerblock (8) in Förderrichtung (3) verfahrbar, aber nicht verdrehbar ist und unterhalb des Drehtellers (4) eine Steuerschiene (11) mit mindestens einer kurvenförmigen Kulisse (12) vorgesehen ist, in welche die Kurvenrolle (10) eingreift wodurch beim Verfahren des Trägerblocks (8) die Kurvenrolle (10) in der Kulisse (12) abrollt und damit den Drehwinkel zwischen Drehteller (4) und Trägerblock (8) bestimmt.

11. Vorrichtung nach Anspruch 10, **dadurch gekennzeichnet, daß** die Hebevorrichtung (6) auf die dem Stapel (1) abgewandte Unterseite der Steuerschiene (11) wirkt, deren Oberseite wiederum auf die Scheibe (9) wirkt und so der Drehteller (4) gemeinsam mit der Steuerschiene (11) höhenverstellbar ist.

12. Vorrichtung nach einem der Ansprüche 10 oder 11, **dadurch gekennzeichnet, daß** eine in Förderrichtung (3) verlaufende Kettenanordnung (13) mit zwei Endlosketten (14) vorgesehen ist, zwischen und an welchen der Trägerblock (8) befestigt ist.

13. Vorrichtung nach Anspruch 12, **dadurch gekennzeichnet, daß** zwischen der Unterseite des Trägerblocks (8) und der Oberseite der Scheibe (9) eine Rückholfeder (15) angeordnet ist, unter deren Wirkung der Drehteller (4) in Richtung des Trägerblocks (8) gedrückt wird.

14. Vorrichtung nach einem der Ansprüche 11 bis 13, **dadurch gekennzeichnet, daß** die Hebevorrichtung (6) eine asymmetrische, angetriebene Kurvenscheibe (16) aufweist, sowie einen Betätigungshebel (17/18), der einerseits vom Umfang der Kurvenscheibe (16) betätigt wird und andererseits auf die Unterseite (19) der Steuerschiene (11) wirkt.

15. Vorrichtung nach Anspruch 14, **dadurch gekennzeichnet, daß** der Betätigungshebel (17/18) aus zwei im Winkel zueinander stehenden, um eine gemeinsame Achse (20) drehbaren Hebelstücken (17, 18) besteht und zwischen den beiden Hebelstücken (17, 18) eine Ausgleichsfeder (21) wirkt, wodurch der Hub des auf die Steuerschiene (11) wirkenden zweiten Hebelstücks (18) bei Erreichen einer durch die Ausgleichsfeder (21) bestimmten Kraft begrenzt wird.

16. Vorrichtung nach einem der Ansprüche 10 bis 15, **dadurch gekennzeichnet, daß** eine Rückführsteuerschiene (22) mit einer Kulisse (23) vorgesehen ist, welche sich beidseits an die Steuerschiene (11) anschließt und den Trägerblock (8) über die Kurvenrolle (10) am Ende der Steuerschiene (11) aufnimmt und unterhalb der Steuerschiene (11) zu deren Anfang zurückführt.

17. Vorrichtung nach einem der Ansprüche 12 bis 16, **dadurch gekennzeichnet, daß** mehrere Anordnungen aus Drehteller (4) und Trägerblock (8) vorgesehen sind, die in etwa gleichem Abstand zueinander an der Kettenanordnung (13) befestigt sind.

18. Vorrichtung nach einem der Ansprüche 10 bis 17, **dadurch gekennzeichnet, daß** die Steuerschiene (11) eine weitere, gerade verlaufende Kulisse (24) aufweist und zu Beginn der Steuerschiene (11) eine Weiche (25) vorgesehen ist, welche die Kurvenrolle (10) alternativ in eine der beiden Kulissen (12, 24) leitet.

## Claims

1. A device for conveying a stack (1), consisting of at least one horizontal sheet of paper, while simultaneously turning it around the vertical (2), comprising a frame, a turntable (4), movable in the conveying direction (3) and rotatable around a specific angle, for holding the underside of the stack (1), and a pressing device acting on the top of the stack (1) for pressing the stack (1) onto the turntable (4), **characterised in that** the pressing device is a plate (5) secured to the frame, the coefficient of friction between this plate (5) and a sheet of paper is lower than that between the turntable (4) and a sheet of paper, the turntable (4) is mounted so as to be vertically adjustable relative to the frame by a lifting device (6) which lifts the turntable (4), after receiving the stack (1) and during the rotation, in the direction of the plate (5) and presses against the said plate and then moves down again.

2. A device according to Claim 1, **characterised in that** the surface of the turntable (4) carrying the stack (1) is made of polyurethane foam, preferably a polyurethane elastomer with a cellular structure.

3. A device according to one of Claims 1 or 2, **characterised in that** the surface of the plate (5) directed towards the stack (1) is a sheet rolled with a pattern.

4. A device according to Claim 3, **characterised in that** the sheet rolled with a pattern is coated with a plastics material, for instance laminated with a plastics material film.

5. A device according to Claim 1 or 2, **characterised in that** the surface of the plate (5) directed towards the stack (1) has a plurality of rollers (37), the rotational axes (38) of which extend parallel to the plane of the plate (5) and perpendicular to the conveying direction (3).

6. A device according to Claim 5, **characterised in that** several rollers (37) are each arranged on a rotational axis (38) at a distance apart, and a plurality of these roller arrangements (39) are arranged serially in the conveying direction (3) such that the rollers (37) of adjacent roller arrangements (39) are staggered laterally, transversely to the conveying direction (3).

7. A device according to Claim 6, **characterised in that** the spacing of adjacent roller arrangements (39) is so small that - viewed from the side - the rollers (37) of adjacent roller arrangements (39) overlap.

8. A device according to one of Claims 1 or 2,
**characterised in that** the surface of the plate (5) directed towards the stack (1) has a plurality of rotatably mounted balls.

9. A device according to Claim 8, **characterised in that** the balls are mounted between two bearing plates and the bearing plate directed towards the stack has an opening for each ball, through which part of the surface of this ball protrudes.

10. A device according to one of the preceding Claims, **characterised in that** the turntable (4) is seated on one end of an axis (7) which is rotatably mounted in a carrier block (8) and carries at its other end a disc (9) on which a cam roller (10) is rotatably mounted eccentrically in relation to the axis (7) and parallel thereto, the carrier block (8) is movable in the conveying direction (3) but is not rotatable, and underneath the turntable (4) is provided a control rail (11) comprising at least one curved slotted link (12) into which the cam roller (10) engages, as a result of which, as the carrier block (8) moves, the cam roller (10) rolls in the slotted link (12) and thus determines the angle of rotation between the turntable (4) and the carrier block (8).

11. A device according to Claim 10, **characterised in that** the lifting device (6) acts on the underside of the control rail (11) directed away from the stack (1), the upper side of the said control rail in turn acting on the disc (9), and thus the turntable (4) is vertically adjustable jointly with the control rail (11).

12. A device according to one of Claims 10 or 11, **characterised in that** a chain arrangement (13) running in the conveying direction (3) and comprising two endless chains (14) is provided, between and on which the carrier block (8) is fixed.

13. A device according to Claim 12, **characterised in that** a return spring (15) is arranged between the underside of the carrier block (8) and the upper side of the disc (9), under the effect of which the turntable (4) is pressed in the direction of the carrier block (8).

14. A device according to one of Claims 11 to 13, **characterised in that** the lifting device (6) has an asymmetrical, driven cam disc (16) and also an operating lever (17/18) which is operated by the periphery of the cam disc (16), on the one hand, and acts on the underside (19) of the control rail (11), on the other hand.

15. A device according to Claim 14, **characterised in that** the operating lever (17/18) consists of two lever pieces (17, 18) at an angle to one another and rotatable around a common axis (20), and a compensating spring (21) acts between the two lever pieces (17, 18), as a result of which the lift of the second lever piece (18) acting on the control rail (11) is limited when a force determined by the compensating spring (21) is reached.

16. A device according to one of Claims 10 to 15, **characterised in that** a return control rail (22) comprising a slotted link (23) is provided which is connected on both sides to the control rail (11) and holds the carrier block (8) via the cam roller (10) at the end of the control rail (11) and runs underneath the control rail (11) back to the start thereof.

17. A device according to one of Claims 12 to 16, **characterised in that** several arrangements consisting of a turntable (4) and a carrier block (8) are provided which are fixed on the chain arrangement (13) approximately equidistantly to one another.

18. A device according to one of Claims 10 to 17, **characterised in that** the control rail (11) has another, straight slotted link (24), and at the beginning of the control rail (11) a deflector (25) is provided which guides the cam roller (10) alternatively into one of the two slotted links (12, 24).

## Revendications

1. Dispositif permettant de faire avancer une pile (1), qui est constituée d'au moins une feuille de papier horizontale, tout en la faisant simultanément tourner autour de la verticale (302), comprenant un bâti, un plateau rotatif (304), qui peut être déplacé en translation suivant une direction d'avancement (303) et en rotation d'un angle déterminé et qui sert à recevoir la face inférieure de la pile (1), et un dispositif d'application sous pression qui exerce son action sur la face supérieure de la pile (301) et sert à appliquer sous pression la pile (301) sur le plateau rotatif (4), **caractérisé en ce que** le dispositif d'application sous pression est réalisé sous forme d'une plaque (305) fixée au bâti, le coefficient de frottement entre cette plaque (305) et une feuille de papier est inférieur à celui entre le plateau rotatif (4) et une feuille de papier, le plateau rotatif (304) est monté réglable en hauteur vis-à-vis du bâti au moyen d'un dispositif de soulèvement et abaissement (306) qui, après réception de la pile (301) et pendant la rotation, soulève le plateau rotatif (304) en direction de la plaque (305) et l'appuie sous pression sur celle-ci, puis l'abaisse de nouveau.

2. Dispositif suivant la revendication 1, **caractérisé en ce que** la surface du plateau rotatif (304) qui porte la pile (301) est en mousse de polyuréthane, de préférence en élastomère-polyuréthane à structure cellulaire.

3. Dispositif suivant l'une des revendications 1 ou 2, **caractérisé en ce que** la surface de la plaque (305) qui fait face à la pile (301) est réalisée sous forme d'une tôle gaufrée.

4. Dispositif suivant la revendication 3, **caractérisé en ce que** la tôle gaufrée est revêtue de matière plastique, par exemple est stratifiée avec une feuille de matière plastique.

5. Dispositif suivant la revendication 1 ou 2, **caractérisé en ce que** la surface de la plaque (5) qui fait face à la pile (1) comporte de multiples rouleaux (3037) dont les axes de rotation (3038) s'étendent parallèlement au plan de la plaque (305) et perpendiculairement à la direction d'avancement (303).

6. Dispositif suivant la revendication 5, **caractérisé en ce que** chaque fois plusieurs rouleaux (3037) sont disposés sur un axe de rotation (3038) respectif à distance l'un de l'autre et de multiples agencements de rouleaux (3039) de ce type sont disposés l'un derrière l'autre suivant la direction d'avancement (303), **en ce que** les rouleaux (3037) d'agencements de rouleaux (3039) voisins sont décalés latéralement les uns vis-à-vis des autres transversalement à la direction d'avancement (303).

7. Dispositif suivant la revendication 6, **caractérisé en ce que** la distance des agencements de rouleaux (3039) voisins est suffisamment faible pour que les rouleaux (3037) d'agencements de rouleaux (3039) voisins se chevauchent, vus de côté.

8. Dispositif suivant l'une des revendications 1 ou 2, **caractérisé en ce que** la surface de la plaque (5) qui fait face à la pile (301) comporte de multiples billes montées rotatives.

9. Dispositif suivant la revendication 8, **caractérisé en ce que** les billes sont montées entre deux plaques de montage et la plaque de montage qui fait face à la pile comporte, pour chaque bille, une ouverture à travers laquelle une partie de la surface de cette bille fait saillie.

10. Dispositif suivant l'une des revendications précédentes, **caractérisé en ce que** le plateau rotatif (4) repose sur une extrémité d'un axe (307) qui est monté rotatif dans un bloc de support (308) et porte à son autre extrémité un disque (309) sur lequel un galet de came (10) est monté rotatif d'une manière excentrée vis-à-vis de l'axe (307) et parallèlement à celui-ci" le bloc de support (308) peut être déplacé en translation suivant la direction d'avancement (303), mais ne peut pas être déplacé en rotation, et, au-dessous du plateau rotatif (304), il est prévu un rail de commande (3011) comportant au moins une glissière (3012) en forme de came dans laquelle le galet de came (3010) s'engage, de sorte que, lorsque le bloc de support (8) est déplacé en translation, le galet de came (10) roule dans la glissière (3012) et détermine ainsi l'angle de rotation entre le plateau rotatif (304) et le bloc de support (308).

11. Dispositif suivant la revendication 10, **caractérisé en ce que** le dispositif de soulèvement et abaissement (306) exerce son action sur la face inférieure, située à l'opposé de la pile (1), du rail dé commande (3011) dont la face supérieure exerce à son tour son action sur le disque (309) et le plateau rotatif (304) est ainsi réglable en hauteur en commun avec le rail de commande (3011).

12. Dispositif suivant l'une des revendications 10 ou 11, **caractérisé en ce qu'**il est prévu, s'étendant suivant la direction d'avancement (303), un agencement à chaînes (3013) comportant deux chaînes sans fin (3014) entre lesquelles et sur lesquels le bloc de support (308) est fixé.

13. Dispositif suivant la revendication 12, **caractérisé en ce qu'**est disposé entre la face inférieure du bloc de support (308) et la face supérieure du disque (309) un ressort de rappel (3015) sous l'action duquel le plateau rotatif (304) est repoussé en direction du bloc de support (308).

14. Dispositif suivant l'une des revendications 11 à 13, **caractérisé en ce que** le dispositif de soulèvement et abaissement (306) comporte un disque à came (3016) entraîné et asymétrique, et un levier d'actionnement (17/18) qui d'une part est actionné par le contour périphérique du disque à came (16) et d'autre part exerce son action sur la face inférieure (3019) du rail de commande (3011).

15. Dispositif suivant la revendication 14, **caractérisé en ce que** le levier d'actionnement (17/18) est constitué de deux segments de levier (17, 18) qui font qu'un angle entre eux et peuvent être déplacés en rotation autour d'un axe commun (3020) et un ressort de compensation (3021) exerce son action entre les deux segments de levier (17, 18), de sorte que la course du second segment de levier (3018) exerçant son action sur le rail de commande (3011) est limitée lorsqu'une force déterminée est atteinte par le ressort de compensation (3021).

16. Dispositif suivant l'une des revendications 10 à 15, **caractérisé en ce qu'**un rail de commande de retour (3022) est pourvu d'une glissière (3023) qui se raccorde des deux côtés au rail de commande (3011) et reçoit le bloc de support (308) par l'intermédiaire du galet de came (10) à la fin du rail de commande (3011) et le ramène au-dessous du rail de commande (3011) au début de celui-ci.

17. Dispositif suivant l'une des revendications 12 à 16, **caractérisé en ce qu'**il est prévu plusieurs agencements qui sont constitués d'un plateau rotatif (304) et d'un bloc de support (308) et qui sont fixés à intervalles approximativement égaux l'un vis-à-vis de l'autre sur l'agencement à chaînes (3013).

18. Dispositif suivant l'une des revendications 10 à 17, **caractérisé en ce que** le rail de commande (3011) comporte une autre glissière (3024) s'étendant d'une manière rectiligne et **en ce qu'**au début du rail de commande (3011), il est prévu un aiguillage (3025) qui guide le galet de came (10) alternativement dans l'une des deux glissières (12, 24).
